# EUROPÄISCHE PATENTSCHRIFT

(11) **EP 4 667 301 B1**
(45) Veröffentlichungstag und Bekanntmachung des Hinweises auf die Patenterteilung: **30.09.2026**
(21) Anmeldenummer: 24182870.6
(22) Anmeldetag: 18.06.2024
(51) Int. Cl.: B60T 7/04, B60T 8/17, B60T 8/32, H04L 12/40, B60T 8/92

(54) **BEDIENSYSTEM FÜR EIN FAHRZEUG SOWIE FAHRZEUG UND VERFAHREN ZUM BETREIBEN EINES FAHRZEUGS MIT EINEM BEDIENSYSTEM**
OPERATING SYSTEM FOR A VEHICLE, AND VEHICLE AND METHOD FOR OPERATING A VEHICLE WITH AN OPERATING SYSTEM
SYSTÈME DE COMMANDE POUR UN VÉHICULE AINSI QUE VÉHICULE ET PROCÉDÉ DE FONCTIONNEMENT D'UN VÉHICULE DOTÉ D'UN SYSTÈME DE COMMANDE

(43) Veröffentlichungstag der Anmeldung: 24.12.2025
(73) Patentinhaber: ZF CV Systems Global GmbH, 3006 Bern (CH)
(72) Erfinder: VAN THIEL, Julian, 30938 Grossburgwedel (DE)
(74) Vertreter: Schäferjohann, Volker

(56) Entgegenhaltungen:
- EP-B1- 1 781 499
- CN-A- 115 230 654
- CN-C- 100 413 739
- DE-A1- 102022 116 307

## Beschreibung

Die Erfindung betrifft den Bereich der Fahrzeuge und insbesondere den Bereich der Nutzfahrzeuge, wie Lastkraftwagen, Sattelschlepper oder landwirtschaftliche Zugmaschinen.

Moderne Fahrzeuge weisen eine Vielzahl von Steuergeräten auf, die auch "electronic control unit" oder kurz ECU, genannt werden. Die Steuergeräte werden eingesetzt, um einzelne Funktionen des Fahrzeugs zu steuern. Vorzugsweise werden durch die Steuergeräte beispielsweise Aktoren des Fahrzeugs angesteuert und Sensoren des Fahrzeugs ausgelesen. Beispiele für Steuergeräte von Fahrzeugen sind Bremssteuergeräte, kurz EBS, zum Ansteuern verschiedenartiger Bremsfunktionalitäten, wie beispielsweise ein Ansteuern von Reibbremsen oder einer Parkbremse des Fahrzeugs, und Luftfedersteuergeräte zum Ansteuern einer Luftfederung.

Steuergeräte von modernen Fahrzeugen sind teilweise über ein Fahrzeugnetzwerk zur Datenkommunikation, insbesondere einen Datenbus, miteinander verbunden, um Daten untereinander auszutauschen. So kann beispielsweise mit einem Steuergerät eines Luftfedersystems eine Masse des Fahrzeugs bestimmt werden. Hierzu wird mit einem Sensor der vorherrschende Druck in den Luftbälgen gemessen und an das Steuergerät des Luftfedersystems übertragen. Aus dem vorherrschenden Druck kann das Steuergerät die Masse bestimmen und die bestimmte Masse beispielsweise für ein Bremssteuergerät bereitstellen. Das Bremssteuergerät kann diese bestimmte Masse bei der Ansteuerung der Aktoren berücksichtigen.

Darüber hinaus sind für verschiedene Anwendungen, insbesondere für sicherheitskritische Anwendungen, redundante Steuergeräte vorgesehen. Somit ist es bekannt, dass Fahrzeuge beispielsweise über ein primäres Steuergerät, wie beispielsweise ein primäres Bremssteuergerät, und ein sekundäres Steuergerät, wie beispielsweise ein sekundäres Bremssteuergerät, verfügen. Primäres und sekundäres weisen Steuergerät im Wesentlichen die gleiche Funktionalität auf, so dass das primäre Steuergerät die ihm zugeordnete Funktion so lange ausführt, bis eine Ausführung, beispielsweise durch einen Fehler, nicht mehr möglich ist. Das sekundäre Steuergerät übernimmt in diesem Fall die Aufgaben des primären Steuergeräts. Zur weiteren Erhöhung der Ausfallsicherheit sind neben den redundanten Steuergeräten auch häufig Redundanzen in den von den Steuergeräten angesteuerten Aktoren bereitgestellt. Auch Sensoren, die Eingangssignale für die Steuergeräte bilden, sind häufig redundant vorgesehen. Als Stand der technik kann das Dokument CN 115 230 654 A zitiert werden.

Demnach sind Bedienelemente, wie beispielsweise Pedale oder Schalter, des Fahrzeugs, die von einem Fahrer betätigt werden, mit redundanten Sensoren ausgestattet, um im Fehlerfall eines der Sensoren, beispielsweise eines primären Sensors, weiterhin Sensorwerte eines zweiten Sensors, beispielsweise eines sekundären Sensors, bereitstellen zu können und so die Ausfallsicherheit und damit die gesamte Sicherheit des Fahrzeugs zu erhöhen.

Um die beschriebene hohe Ausfallsicherheit zu ermöglichen, ist somit eine aufwendige Verkabelung nötig. Beispielsweise jedes Bedienelement, das eine redundante Sensorik aufweist, muss, um hier die vollständige Kette, zumindest bis zu redundanten Steuergeräten zu ermöglichen, getrennte elektrische Verbindungen zwischen der Sensorik und dem Steuergerät aufweisen. Neben der redundanten Sensorik im Bedienelement muss somit auch eine redundante Kommunikationseinheit vorgesehen sein. Ein primärer Sensor eines Bedienelements ist somit über eine primäre Kommunikationseinheit mit einem primären Steuergerät verbunden, wobei der sekundäre Sensor über eine sekundäre Kommunikationseinheit mit einem sekundären Steuergerät verbunden ist. Gegenüber nicht redundant ausgelegten Bedienelementen und Steuergeräten wird somit ein Verkabelungsaufwand zwischen jedem der Bedienelemente und den Steuergeräten verdoppelt.

Insbesondere im Bereich der Nutzfahrzeuge ist durch gefederte oder sogar klappbare Fahrerkabinen gegenüber einem Fahrzeugrahmen eine Kabelverbindung zwischen einem Innenraum der Kabine und dem Rahmen des Fahrzeugs, an dem üblicherweise die Steuergeräte angeordnet sind, besonders kritisch. Es sind nämlich Relativbewegungen zwischen der Fahrerkabine und dem Fahrzeugrahmen möglich. Insbesondere bei Zunahme der elektrischen Verbindungen im Bereich dieser Relativbewegungen und dem damit zunehmenden benötigten Bauraum, der teilweise begrenzt ist, wird wiederum die Gefahr eines Kabelbruchs und somit die Gefahr eines Systemausfalls erhöht.

Aufgabe der vorliegenden Erfindung ist es daher, den Problemen des Standes der Technik zu begegnen. Insbesondere soll eine Möglichkeit gefunden werden, eine redundante Kommunikation zwischen Bedienelementen und Steuergeräten bereitzustellen, bei der die Gefahr defekter Kabelverbindungen zwischen den Bedienelementen und den Steuergeräten oder ein Verkabelungsaufwand reduziert oder jedenfalls trotz redundanter Auslegung nicht verschlechtert wird. Jedenfalls ist es Aufgabe der vorliegenden Erfindung, eine Alternative zu dem aus dem Stand der Technik Bekannten zu finden.

Erfindungsgemäß wird daher ein Bediensystem nach Anspruch 1 vorgeschlagen.

Demnach wird ein Bediensystem vorgeschlagen, das eine erste Bedieneinheit umfasst. Die erste Bedieneinheit weist eine erste primäre Eingabeerfassungseinheit und eine erste sekundäre Eingabeerfassungseinheit auf. Die erste primäre Eingabeerfassungseinheit dient zum Erfassen von ersten Eingaben in die erste Bedieneinheit, wobei auch die erste sekundäre Eingabeerfassungseinheit zum Erfassen der ersten Eingaben in die erste Bedieneinheit dient. Die erste primäre Eingabeerfassungseinheit ist dazu ausgebildet, in Abhängigkeit von den erfassten ersten Eingaben, erste primäre elektrische Informationen auszugeben und vorzugsweise die ersten primären elektrischen Informationen in Abhängigkeit von den erfassten ersten Eingaben zur Ausgabe zu erzeugen. Die erste sekundäre Eingabeeinheit ist eingerichtet, um in Abhängigkeit von den erfassten ersten Eingaben, erste sekundäre elektrische Informationen auszugeben und vorzugsweise die ersten sekundären elektrischen Informationen in Abhängigkeit von den erfassten ersten Eingaben zur Ausgabe zu erzeugen.

Die ersten Eingaben entsprechen beispielsweise oder resultieren beispielsweise aus einer mechanischen Bewegung, die von einem Fahrer des Fahrzeugs ausgeführt wird, um einen Fahrerwunsch anzukündigen. Es kann sich bei den ersten Eingaben beispielsweise um verschiedene Stellungen eines Schalters oder verschiedene Positionen eines Pedals oder Wahlhebels handeln. Die erste primäre Eingabeerfassungseinheit erfasst somit genauso wie die erste sekundäre Eingabeerfassungseinheit diese ersten Eingaben und die beiden Eingabeerfassungseinheiten erzeugen unabhängig voneinander entsprechende elektrische Informationen, nämlich die ersten primären elektrischen Informationen und die ersten sekundären elektrischen Informationen.

Ferner umfasst die erste Bedieneinheit eine erste Kommunikationseinheit, die mit der ersten primären Eingabeerfassungseinheit verbunden ist. Die Kommunikationseinheit ist eingerichtet, um die ersten primären elektrischen Informationen zu empfangen und Daten in Abhängigkeit von den ersten primären elektrischen Informationen vorzugsweise zu erzeugen und an ein primäres Steuergerät zu übertragen. Die ersten Eingaben werden somit durch die erste primäre Eingabeerfassungseinheit in erste primäre elektrische Informationen überführt und diese ersten primären elektrischen Informationen mit der ersten Kommunikationseinheit in Form von Daten an ein primäres Steuergerät übertragen. Mit dem primären Steuergerät können so beispielsweise Aktoren oder weitere Systeme in Abhängigkeit von den ersten Eingaben und beispielsweise im primären Steuergerät hinterlegter Parameter oder beispielsweise vom primären Steuergerät empfangener Sensorwerte angesteuert werden.

Ferner umfasst die erste Bedieneinheit eine erste Schnittstelle zum Verbinden mit einer zweiten Bedieneinheit. Die erste Schnittstelle dient, um zweite sekundäre elektrische Informationen von einer zweiten sekundären Eingabeerfassungseinheit der zweiten Bedieneinheit zu empfangen. Demnach ist eine Schnittstelle vorgesehen, mit der eine weitere, nämlich die zweite Bedieneinheit, mit der ersten Bedieneinheit derart verbunden werden kann, um weitere elektrische Informationen, nämlich die zweiten sekundären elektrischen Informationen, von einer Eingabeerfassungseinheit außerhalb der ersten Bedieneinheit, nämlich von der zweiten sekundären Eingabeerfassungseinheit der zweiten Bedieneinheit, zu empfangen.

Die erste Kommunikationseinheit ist ferner mit der ersten Schnittstelle verbunden, um die zweiten sekundären elektrischen Informationen der zweiten Bedieneinheit zu empfangen und Daten in Abhängigkeit von den zweiten sekundären elektrischen Informationen an das primäre Steuergerät zu übertragen. Somit ist die erste Kommunikationseinheit eingerichtet, nicht nur Daten in Abhängigkeit von den ersten primären elektrischen Informationen der ersten Bedieneinheit, sondern auch in Abhängigkeit von zweiten sekundären elektrischen Informationen einer zweiten Bedieneinheit, an das primäre Steuergerät zu übertragen.

Die erste Bedieneinheit stellt somit vorzugsweise eine redundante Kommunikationsverbindung für eine weitere Bedieneinheit dar, wodurch mithilfe der Schnittstelle zwischen Bedieneinheiten auf zusätzliche redundante Verbindungen zwischen den Bedieneinheiten und den Steuergeräten verzichtet werden kann. Der Erfindung liegt hierbei die Kenntnis zugrunde, dass ein zusätzlicher Verkabelungsaufwand zwischen Bedieneinheiten weniger fehleranfällig ist, als zusätzliche Verbindungen jeweils zwischen den einzelnen Bedieneinheiten und den Steuergeräten.

Gemäß einer ersten Ausführungsform umfasst die erste Bedieneinheit ein erstes Energieversorgungsmodul zur Energieversorgung der ersten primären Eingabeerfassungseinheit und/oder der ersten Kommunikationseinheit. Das erste Energieversorgungsmodul ist beispielsweise mit einer primären Energiequelle des Fahrzeugs oder einem primären Steuergerät, um daraus Energie zu beziehen, verbindbar. Das erste Energieversorgungsmodul dient so zur Versorgung von Energie der primären Eingabeerfassungseinheit und der ersten Kommunikationseinheit. Im einfachsten Fall kann das erste Energieversorgungsmodul lediglich eine Einrichtung sein, um Energie aus einer primären Energiequelle, wie einer Fahrzeugbatterie, vorzugsweise über einen Anschluss, des ersten Bediensystems aufzunehmen und unangepasst an die erste Kommunikationseinheit und die erste primäre Eingabeerfassungseinheit zu verteilen. Das erste Energieversorgungsmodul kann aber auch als Spannungswandler ausgebildet sein, um eine Energie mit einer Spannung von beispielsweise 12 oder 24 Volt von einer Fahrzeugbatterie zu erhalten und diese herabzutransformieren, so dass beispielsweise eine Spannung von 5 Volt für die erste Kommunikationseinheit und die erste primäre Eingabeerfassungseinheit ausgegeben wird. Ferner ist das erste Energieversorgungsmodul mit der ersten Schnittstelle verbunden und eingerichtet, Energie über die erste Schnittstelle auszugeben, so dass die erste Schnittstelle eingerichtet ist, die zweite sekundäre Eingabeerfassungseinheit der zweiten Bedieneinheit mit Energie vom ersten Energieversorgungsmodul zu versorgen.

Die erste Bedieneinheit stellt somit nicht nur einen redundanten Kommunikationskanal für eine weitere Bedieneinheit dar, sondern ist auch eingerichtet, eine redundante Eingabeerfassungseinheit einer zweiten Bedieneinheit mit Energie zu versorgen, um so für eine zweite Bedieneinheit vollständig unabhängig von primären Komponenten der zweiten Bedieneinheit einen unabhängigen Betrieb sekundärer Komponenten zu ermöglichen.

Gemäß einer weiteren Ausführungsform ist die erste sekundäre Eingabeerfassungseinheit mit der ersten Schnittstelle verbunden. Die erste sekundäre Eingabeerfassungseinheit ist so eingerichtet, die ersten sekundären elektrischen Informationen in Abhängigkeit von den erfassten ersten Eingaben an der ersten Schnittstelle auszugeben. Die ersten sekundären elektrischen Informationen der ersten sekundären Eingabeerfassungseinheit werden somit über die Schnittstelle bereitgestellt, so dass diese über eine weitere Bedieneinheit, wie beispielsweise eine zweite Bedieneinheit, die vorzugsweise identisch zur ersten Bedieneinheit ausgebildet ist, für ein sekundäres Steuergerät bereitgestellt werden können.

Die erste sekundäre Eingabeerfassungseinheit mit der ersten Schnittstelle ermöglicht somit gleichzeitig einen redundanten Datenweg oder Kommunikationskanal für die erste Bedieneinheit.

Vorzugsweise ist die erste sekundäre Eingabeerfassungseinheit galvanisch von der ersten Kommunikationseinheit und/oder dem ersten Energieversorgungsmodul getrennt oder trennbar. Die erste sekundäre Eingabeerfassungseinheit ist vorzugsweise auch galvanisch von der ersten primären Eingabeerfassungseinheit getrennt oder trennbar.

Fehler in der ersten primären Eingabeerfassungseinheit, der ersten Kommunikationseinheit oder im ersten Energieversorgungsmodul können somit nicht die erste sekundäre Eingabeerfassungseinheit beeinflussen oder umgekehrt.

Gemäß einer weiteren Ausführungsform umfasst das Bediensystem eine zweite Bedieneinheit. Die zweite Bedieneinheit weist eine zweite primäre Eingabeerfassungseinheit zum Erfassen von zweiten Eingaben in die zweite Bedieneinheit und zur Ausgabe von zweiten primären elektrischen Informationen in Abhängigkeit von den erfassten zweiten Eingaben auf. Ferner umfasst die zweite Bedieneinheit eine zweite Kommunikationseinheit, die mit der zweiten primären Eingabeerfassungseinheit verbunden ist. Die Kommunikationseinheit ist eingerichtet, die zweiten primären elektrischen Informationen zu empfangen und Daten in Abhängigkeit von den zweiten primären elektrischen Informationen an ein sekundäres Steuergerät zu übertragen.

Demnach werden mit der zweiten Bedieneinheit zweite Eingaben, die sich von den ersten Eingaben unterscheiden, erfasst. Auch die zweiten Eingaben können durch Betätigen eines Schalters, eines Pedals oder dergleichen von einem Fahrer erzeugt werden. Mit der zweiten primären Eingabeerfassungseinheit werden die zweiten Eingaben, die vorzugsweise mechanischen Bewegungen oder mechanischen Positionen eines bewegbaren Elements entsprechen oder daraus resultieren, in elektrische Informationen oder Signale, nämlich die zweiten primären elektrischen Informationen, gewandelt, um diese an die zweite Kommunikationseinheit zu senden. Mit der zweiten Kommunikationseinheit werden hieraus Daten erzeugt, die die zweiten Eingaben repräsentieren und die an ein sekundäres Steuergerät übertragen werden.

Außerdem umfasst auch die zweite Bedieneinheit eine Schnittstelle, nämlich eine zweite Schnittstelle, zum Verbinden mit der ersten Bedieneinheit. Vorzugsweise sind die erste und die zweite Schnittstelle des Bediensystems miteinander verbunden. Mit der zweiten Schnittstelle ist die zweite Bedieneinheit eingerichtet, die ersten sekundären elektrischen Informationen von der ersten sekundären Eingabeerfassungseinheit der ersten Bedieneinheit zu empfangen. Außerdem ist die zweite Kommunikationseinheit mit der zweiten Schnittstelle verbunden, um die ersten sekundären elektrischen Informationen zu empfangen. Die zweite Kommunikationseinheit ist ferner eingerichtet, Daten in Abhängigkeit von den ersten sekundären elektrischen Informationen in das sekundäre Steuergerät zu übertragen.

Demnach ist also die zweite Kommunikationseinheit eingerichtet, Daten in Abhängigkeit von den zweiten primären elektrischen Informationen, die die zweiten Eingaben repräsentieren, und Daten in Abhängigkeit von den ersten sekundären elektrischen Informationen, die die ersten Eingaben repräsentieren, zu erzeugen und an das sekundäre Steuergerät zu senden.

Dank der ersten Schnittstelle und der zweiten Schnittstelle sowie der zwei Bedieneinheiten kann so ein redundanter Datenweg für die erste Bedieneinheit über die zweite Bedieneinheit und umgekehrt geschaffen werden. Im Fall eines Ausfalls der ersten primären Eingabeerfassungseinheit können so Informationen von der ersten sekundären Eingabeerfassungseinheit, nämlich die ersten sekundären elektrischen Informationen, über die erste Schnittstelle von der ersten Bedieneinheit zur zweiten Schnittstelle der zweiten Bedieneinheit übertragen und von dort über die zweite Kommunikationseinheit an das sekundäre Steuergerät übertragen werden. Vorzugsweise entspricht das sekundäre Steuergerät funktional dem primären Steuergerät und ist eingerichtet, entweder die ersten sekundären elektrischen Informationen im Fehlerfall und auch die zweiten primären elektrischen Informationen, die über die zweite Bedieneinheit von der zweiten Kommunikationseinheit empfangen werden, an das primäre Steuergerät weiterzuleiten. Die Daten können auch direkt im sekundären Steuergerät bearbeitet werden, wenn ein Fehler im primären Steuergerät auftritt.

Gemäß einer weiteren Ausführungsform umfasst die zweite Bedieneinheit ein zweites Energieversorgungsmodul zur Energieversorgung der zweiten primären Eingabeerfassungseinheit und der zweiten Kommunikationseinheit. Ferner ist die zweite Schnittstelle der zweiten Bedieneinheit eingerichtet, die erste sekundäre Eingabeerfassungseinheit der ersten Bedieneinheit mit Energie vom zweiten Energieversorgungsmodul zu versorgen.

Hierdurch kann bei galvanischer Trennung des ersten Energieversorgungsmoduls von der ersten sekundären Eingabeerfassungseinheit sowie weiteren Komponenten der ersten Bedieneinheit die erste sekundäre Eingabeerfassungseinheit mit Energie über die zweite Bedieneinheit versorgt werden. Eine vollständig unabhängige Erfassung der ersten Eingaben mit der ersten sekundären Eingabeerfassungseinheit und eine entsprechende Weiterleitung der hieraus gewonnenen Informationen und Daten ist somit unabhängig von den übrigen Modulen oder Einheiten der ersten Bedieneinheit und somit selbst bei Ausfall dieser weiteren Module oder Einheiten möglich. Insbesondere bleibt beim Ausfall oder Fehler des primären Steuergeräts durch die Umleitung über die Bedieneinheiten so eine Funktion der Bedieneinheiten unbeeinflusst.

Gemäß einer weiteren Ausführungsform umfasst die zweite Bedieneinheit die zweite sekundäre Eingabeerfassungseinheit zum Erfassen der zweiten Eingaben in die zweite Bedieneinheit. Die zweite Bedieneinheit umfasst somit zwei Eingabeerfassungseinheiten, nämlich die zweite primäre Eingabeerfassungseinheit und die zweite sekundäre Eingabeerfassungseinheit. Mit beiden Eingabeerfassungseinheiten werden die zweiten Eingaben erfasst. Mit der zweiten primären Eingabeerfassungseinheit werden entsprechend die zweiten primären elektrischen Informationen in Abhängigkeit von den erfassten zweiten Eingaben erzeugt und mit der zweiten sekundären Eingabeerfassungseinheit werden zweite sekundäre elektrische Informationen in Abhängigkeit von den erfassten zweiten Eingaben erzeugt. Die zweiten sekundären elektrischen Informationen werden an der zweiten Schnittstelle ausgegeben.

Somit werden die zweiten sekundären elektrischen Informationen über die zweite Schnittstelle zur ersten Schnittstelle der ersten Bedieneinheit übertragen, so dass die erste Bedieneinheit im Fall eines Fehlers der zweiten primären Eingabeerfassungseinheit oder der zweiten Kommunikationseinheit über die erste Bedieneinheit an das primäre Steuergerät übergeben werden können.

Gemäß einer weiteren Ausführungsform ist die erste Bedieneinheit eine Betriebsbremsbedieneinheit, die ein Pedal aufweist, wobei die erste primäre Eingabeerfassungseinheit einen primären Sensor und die erste sekundäre Eingabeerfassungseinheit einen sekundären Sensor umfasst. Der primäre Sensor und der sekundäre Sensor sind jeweils eingerichtet, eine Pedalstellung des Pedals als erste Eingaben zu erfassen. Der primäre Sensor ist eingerichtet, in Abhängigkeit von der Pedalstellung die ersten primären elektrischen Informationen zu erzeugen und der sekundäre Sensor ist eingerichtet, in Abhängigkeit von der Pedalstellung die ersten sekundären elektrischen Informationen zu erzeugen.

Eine sichere Betriebsbremsbedieneinheit ist so realisierbar.

Gemäß einer weiteren Ausführungsform entspricht die zweite Bedieneinheit einer Parkbremsbedieneinheit. Die Parkbremsbedieneinheit weist ein Handbedienelement, wie einen Schalter oder Hebel, auf. Demnach umfasst die zweite primäre Eingabeerfassungseinheit eine primäre Positionserfassungseinheit und die zweite sekundäre Eingabeerfassungseinheit umfasst eine sekundäre Positionserfassungseinheit. Die Positionserfassungseinheiten sind jeweils eingerichtet, um zumindest eine erste Position und eine zweite Position des Handbedienelements zu erfassen. Vorzugsweise können neben der ersten und zweiten Position weitere Positionen vorgesehen und erfasst werden. Die erste Position des Handbedienelements entspricht einem Parkbremsaktivierungswunsch, mit dem der Fahrer vorzugsweise das Einlegen einer Parkbremse anfordert. Die zweite Position entspricht vorzugsweise einem Parkbremsdeaktivierungswunsch, das heißt, der Fahrer legt das Handbedienelement, wie den Hebel oder den Schalter, in diese Position, um eine Parkbremse zu deaktivieren. Wird die zweite Position oder eine weitere Position während der Fahrt eingelegt, kann zusätzlich eine solche Position als Hilfsbremswunsch erkannt werden, mit der der Fahrer beispielsweise eine kontinuierliche Verzögerung, beispielsweise im Fall eines Gefälles, anfordert. Die primäre Positionserfassungseinheit ist eingerichtet, in Abhängigkeit von der erfassten Position, die zweiten primären elektrischen Informationen zu erzeugen und die sekundäre Positionserfassungseinheit ist eingerichtet, um in Abhängigkeit von der erfassten Position die zweiten sekundären elektrischen Informationen zu erzeugen.

Es ist vorteilhaft neben der ersten Bedieneinheit eine weitere der Bedieneinheiten, nämlich vorzugsweise die zweite Bedieneinheit, als Parkbremsbedieneinheit vorzusehen, da eine erhöhte Ausfallsicherheit beim Einlegen einer Parkbremse erforderlich ist. Besonders vorteilhaft ist die Kombination der Ausbildung der ersten Bedieneinheit als Betriebsbremsbedieneinheit und der zweiten Bedieneinheit als Parkbremsbedieneinheit. Diese Kombination der Ausbildung der beiden Bedieneinheiten des Bediensystems ist vorteilhaft, da die Betriebsbremsbedieneinheit sowie auch die Parkbremsbedieneinheit mit demselben Typ von Steuergerät, beispielsweise einem Bremssteuergerät, zur Anforderung der jeweiligen Bremswünsche kommunizieren. Daten von den entsprechenden Kommunikationseinheiten können somit an dasselbe funktionale Steuergerät übertragen werden und ein Weiterleiten der entsprechenden Daten an ein weiteres Steuergerät wird somit vermieden.

Gemäß einer weiteren Ausführungsform ist die erste Kommunikationseinheit eingerichtet, über die erste Schnittstelle oder eine erste weitere Schnittstelle von einer Zustandserfassungseinheit, insbesondere einen Lenkwinkelsensor, dritte elektrische Informationen zu empfangen. Der Lenkwinkelsensor gibt beispielsweise einen Drehwinkel einer Lenkung des Fahrzeugs an und gibt diese als dritte elektrische Informationen aus. Die erste Kommunikationseinheit ist ferner eingerichtet, Daten in Abhängigkeit von den dritten elektrischen Informationen an das primäre Steuergerät zu übertragen.

Alternativ oder zusätzlich ist die zweite Kommunikationseinheit eingerichtet, über die zweite Schnittstelle oder eine zweite weitere Schnittstelle von der Zustandserfassungseinheit die dritten elektrischen Informationen zu empfangen. Die zweite Kommunikationseinheit ist außerdem eingerichtet, Daten in Abhängigkeit von den dritten elektrischen Informationen an das sekundäre Steuergerät zu übertragen. Die Steuergeräte können so verwendet werden, um weitere Daten, beispielsweise Sensordaten, die einen Zustand eines Elements im Bereich der Fahrzeugkabine angeben, mitzuübertragen oder im Fall, dass beide Bedieneinheiten mit der Zustandserfassungseinheit verbunden sind, sogar auf redundanten Wegen zu übertragen. Weitere Verbindungsleitungen oder Datenkabel zwischen Steuergeräten, die am Chassis des Fahrzeugs befestigt sind, und Elementen im Bereich der Fahrerkabine können so reduziert oder auf diese verzichtet werden.

Gemäß einer weiteren Ausführungsform umfasst die erste Bedieneinheit eine erste Plausibilisierungseinheit, um die ersten primären elektrischen Informationen gegenüber den ersten sekundären elektrischen Informationen zu plausibilisieren. Alternativ oder zusätzlich umfasst auch die zweite Bedieneinheit eine zweite Plausibilisierungseinheit. Die zweite Plausibilisierungseinheit ist eingerichtet, um die zweiten primären elektrischen Informationen gegenüber den zweiten sekundären elektrischen Informationen zu plausibilisieren. Durch die Plausibilisierungseinheiten wird sichergestellt, dass Abweichungen der aus den entsprechenden Eingaben erzeugten elektrischen Informationen erkannt werden. Gegebenenfalls kann von einer Verarbeitung der als fehlerhaft erkannten elektrischen Informationen auf eine Verarbeitung umgeschaltet werden, bei der die jeweils redundanten elektrischen Informationen verarbeitet werden.

Gemäß einer Ausführungsform sind der ersten und/oder zweiten Plausibilisierungseinheit weitere Signale zur Plausibilisierung, insbesondere der entsprechenden elektrischen Informationen, zuführbar. Derartige weitere Signale sind vorzugswese elektrische Signale beispielsweise weiterer Sensoren, insbesondere der jeweils zugeordneten Bedieneinheiten, oder weitere Signale weiterer Steuereinheiten.

So kann beispielsweise mindestens ein Endlagenschalter in der ersten und/oder zweiten Bedieneinheit neben den Eingabeerfassungseinheiten vorgesehen sein, um eine definierte Stellung eines Schalters, Pedals oder Wahlhebels zu erfassen und als weiteres Signal an die entsprechende Plausibilisierungseinheit weiterzuleiten. Die weiteren Signale können dann bei der Plausibilisierung berücksichtigt werden.

Alternativ oder zusätzlich kann auch eine erste weitere Eingabeerfassungseinheit in der ersten Bedieneinheit und eine zweite weitere Eingabeeinheit in der zweiten Bedieneinheit bereitgestellt werden. Mit der ersten weiteren Eingabeerfassungseinheit sind die ersten Eingaben erfassbar und mit der zweiten weiteren Eingabeerfassungseinheit sind die zweiten Eingaben erfassbar. Elektrische weitere Signale der ersten weiteren Eingabeerfassungseinheit sind somit der ersten Plausibilisierungseinheit zur Plausibilisierung zuführbar und elektrische weitere Signale der zweiten weiteren Eingabeerfassungseinheit sind der zweiten Plausibilisierungseinheit zur Plausibilisierung zuführbar.

Gemäß einer weiteren Ausführungsform umfasst das Bediensystem das primäre Steuergerät und/oder das sekundäre Steuergerät.

Gemäß einer weiteren Ausführungsform ist eine Datenverbindung zwischen dem primären Steuergerät und dem sekundären Steuergerät bereitgestellt, um Daten zwischen dem primären Steuergerät und dem sekundären Steuergerät auszutauschen. Die Datenverbindung ist vorzugsweise eingerichtet, die ersten primären elektrischen Informationen gegenüber den ersten sekundären elektrischen Informationen und/oder die zweiten primären elektrischen Informationen gegenüber den zweiten sekundären elektrischen Informationen zu plausibilisieren. Demnach findet eine Plausibilisierung nicht in den Bedieneinheiten oder zusätzlich zu den Bedieneinheiten in den Steuergeräten statt. Insbesondere bei ausschließlicher Plausibilisierung durch die primären und sekundären Steuergeräte ist eine galvanische Trennung der einzelnen Erfassungseinheiten in den Bedieneinheiten möglich. Die Datenverbindung dient vorzugsweise auch zur Übertragung der zweiten primären elektrischen Informationen vom sekundären Steuergerät an das primäre Steuergerät im fehlerfreien Fall des Bediensystems.

Gemäß einer weiteren Ausführungsform ist das primäre Steuergerät und/oder das sekundäre Steuergerät ein rahmenmontierbares Steuergerät. Das primäre Steuergerät und/oder das sekundäre Steuergerät sind eingerichtet, um an einer gegenüber einem Fahrzeugrahmen starren Position am Fahrzeug angebracht zu werden.

Ferner betrifft die Erfindung ein Fahrzeug mit einem Bediensystem nach einer der vorgenannten Ausführungsformen.

Außerdem betrifft die Erfindung ein Verfahren zum Betreiben eines Fahrzeugs mit einem Bediensystem nach einer der vorgenannten Ausführungsformen.

Gemäß einer Ausführungsform umfasst das Verfahren im Fall einer fehlerfreien ersten Bedieneinheit und eines fehlerfreien primären Steuergeräts zunächst das Erfassen von ersten Eingaben mit einer ersten primären Eingabeerfassungseinheit. Ferner werden erste primäre elektrische Informationen in Abhängigkeit von den erfassten ersten Eingaben mit der ersten primären Eingabeerfassungseinheit ausgegeben. Außerdem werden Daten in Abhängigkeit von den ersten primären elektrischen Informationen an ein primäres Steuergerät mit einer ersten Kommunikationseinheit übertragen. Im genannten fehlerfreien Fall umfasst das Verfahren ferner die mit einer zweiten Bedieneinheit ausgeführten Schritte, dass zunächst zweite Eingaben mit einer zweiten primären Eingabeerfassungseinheit erfasst werden und zweite primäre elektrische Informationen in Abhängigkeit von den erfassten zweiten Eingaben mit der zweiten primären Eingabeerfassungseinheit ausgegeben werden. In Abhängigkeit von den zweiten primären elektrischen Informationen werden durch eine zweite Kommunikationseinheit Daten an ein sekundäres Steuergerät übertragen.

Im Fall, dass ein Fehler der ersten primären Eingabeerfassungseinheit, ein Fehler der ersten Kommunikationseinheit und/oder ein Fehler des primären Steuergeräts auftritt, umfasst das Verfahren die Schritte, dass erste Eingaben mit einer ersten sekundären Eingabeerfassungseinheit der ersten Bedieneinheit erfasst werden, wobei erste sekundäre elektrische Informationen in Abhängigkeit von den erfassten ersten Eingaben mit der ersten sekundären Eingabeerfassungseinheit ausgegeben werden. Daraufhin werden die ersten sekundären elektrischen Informationen von der ersten Bedieneinheit an die zweite Bedieneinheit mittels einer ersten Schnittstelle der ersten Bedieneinheit und einer zweiten Schnittstelle der zweiten Bedieneinheit übertragen. Daten werden dann in Abhängigkeit von den ersten sekundären elektrischen Informationen an ein sekundäres Steuergerät durch die zweite Kommunikationseinheit übertragen.

Weitere Ausführungsformen ergeben sich anhand der in den Figuren näher erläuterten Ausführungsbeispiele. Hierbei zeigen:
- Fig. 1: ein Bediensystem gemäß einem Ausführungsbeispiel,
- Fig. 2: ein Fahrzeug mit dem Bediensystem und
- Fig. 3: die Schritte eines Verfahrens zum Betreiben eines Fahrzeugs mit einem Bediensystem.

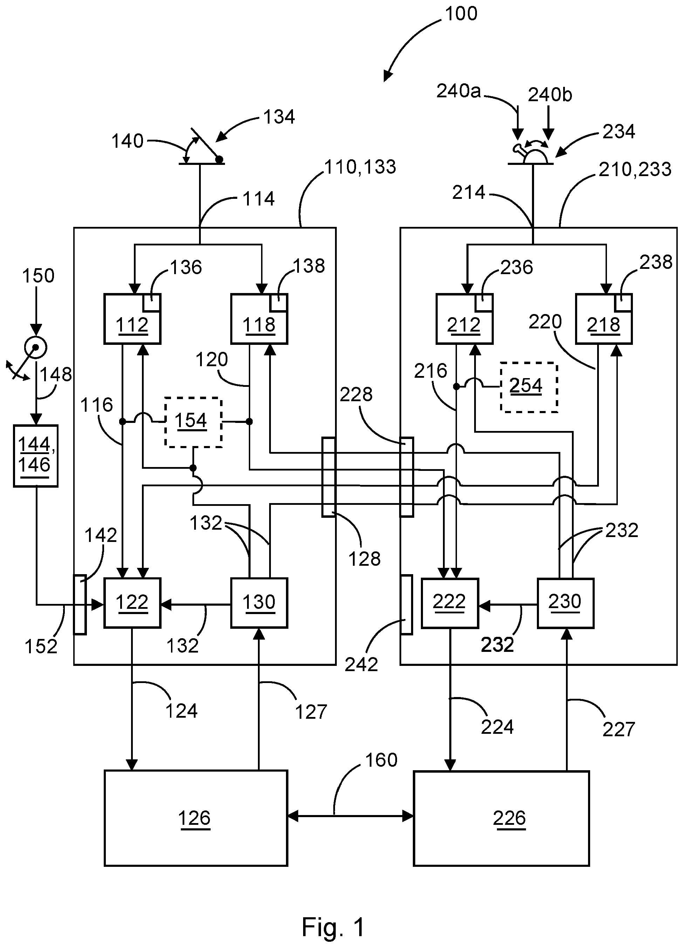

Fig. 1 zeigt ein Bediensystem 100 für ein Fahrzeug. Das Bediensystem 100 umfasst eine erste Bedieneinheit 110 und eine zweite Bedieneinheit 210. In dem in Fig. 1 dargestellten Ausführungsbeispiel entspricht die erste Bedieneinheit 110 einer Betriebsbremsbedieneinheit 133, die ein Pedal 134 umfasst, das unterschiedliche Pedalstellungen 140 einnehmen kann. In Abhängigkeit von den Pedalstellungen 140 werden dann erste Eingaben 114 für die weitere Verarbeitung bereitgestellt. Die zweite Bedieneinheit 210 entspricht in dem in Fig. 1 dargestellten Ausführungsbeispiel einer Parkbremsbedieneinheit 233. Die Parkbremsbedieneinheit 233 umfasst ein Handbedienelement 134, das zumindest zwischen einer ersten Position 240a und einer zweiten Position 240b von einem Fahrer bewegt werden kann. Entsprechend der eingenommenen Position 240a, 240b werden zweite Eingaben 214 zur weiteren Verarbeitung in der zweiten Bedieneinheit 210 erzeugt.

Die erste Bedieneinheit 110 umfasst eine erste primäre Eingabeerfassungseinheit 112 mit einem primären Sensor 136 und eine erste sekundäre Eingabeerfassungseinheit 118 mit einem sekundären Sensor 138. In Abhängigkeit von den der ersten primären Eingabeerfassungseinheit 112 und der ersten sekundären Eingabeerfassungseinheit 118 zugeführten ersten Eingaben 114 werden elektrische Informationen erzeugt. Demnach erzeugt die erste primäre Eingabeerfassungseinheit 112 erste primäre elektrische Informationen 116 in Abhängigkeit von den erfassten ersten Eingaben 114. Die erste sekundäre Eingabeerfassungseinheit 118 erzeugt erste sekundäre elektrische Informationen 120 in Abhängigkeit von den erfassten ersten Eingaben 114.

Die ersten primären elektrischen Informationen 116 werden einer ersten Kommunikationseinheit 122 zugeführt und Daten 124, die mit der ersten Kommunikationseinheit 122 in Abhängigkeit von den ersten primären elektrischen Informationen 116 erzeugt werden, an ein primäres Steuergerät 126 übertragen. Das primäre Steuergerät 126 stellt außerdem Energie 127 für ein erstes Energieversorgungsmodul 130 bereit, das die erste Kommunikationseinheit 122 sowie die erste primäre Eingabeerfassungseinheit 112 mit Energie 132 versorgt. Das primäre Steuergerät 126 dient dann beispielsweise zum Ansteuern nicht dargestellter Aktoren, wie beispielsweise Bremsaktoren.

In einem im Wesentlichen identischen oder genau identischen Aufbau umfasst die zweite Bedieneinheit 210 eine zweite primäre Eingabeerfassungseinheit 212 mit einer primären Positionserfassungseinheit 236, die beispielsweise ebenfalls einem Sensor entspricht und eine zweite sekundäre Eingabeerfassungseinheit 218 mit einer sekundären Positionserfassungseinheit 238. Der zweiten primären Eingabeerfassungseinheit 212 und der zweiten sekundären Eingabeerfassungseinheit 218 werden die zweiten Eingaben 214 zugeführt. Mit der zweiten primären Eingabeerfassungseinheit 212 werden dann zweite primäre elektrische Informationen 216 in Abhängigkeit von den erfassten zweiten Eingaben 214 erzeugt und ausgegeben. Mit der zweiten sekundären Eingabeerfassungseinheit 218 werden entsprechend zweite sekundäre elektrische Informationen 220 in Abhängigkeit von den erfassten zweiten Eingaben 214 erzeugt und ausgegeben. Ferner ist in der zweiten Bedieneinheit 210 eine zweite Kommunikationseinheit 222 vorgesehen, die die zweiten primären elektrischen Informationen 216 empfängt und hieraus Daten 224 erzeugt, um diese an ein sekundäres Steuergerät 226 weiterzuleiten. Das sekundäre Steuergerät 226 stellt Energie 227 für ein zweites Energieversorgungsmodul 230 bereit, das die zweite primäre Eingabeerfassungseinheit 212 sowie die zweite Kommunikationseinheit 222 mit Energie 232 versorgt.

Ferner umfasst die erste Bedieneinheit 110 eine erste Schnittstelle 128 und entsprechend die zweite Bedieneinheit 210 eine zweite Schnittstelle 228, wobei die erste Schnittstelle 128 mit der zweiten Schnittstelle 228 verbunden ist. Über die Schnittstellen 128, 228 wird die erste sekundäre Eingabeerfassungseinheit 118 mit Energie 232 aus dem zweiten Energieversorgungsmodul 230 versorgt und die ersten sekundären elektrischen Informationen 120 werden über die Schnittstellen 128, 228 an die zweite Kommunikationseinheit 222 übertragen. Von der zweiten Kommunikationseinheit 222 werden Daten 224 in Abhängigkeit von den ersten sekundären elektrischen Informationen 120 an das sekundäre Steuergerät 226 übertragen. Die erste sekundäre Eingabeerfassungseinheit 118 ist so galvanisch von den übrigen Komponenten der ersten Bedieneinheit 110 getrennt. Rein optional ist eine erste Plausibilisierungseinheit 154 bereitstellbar, die die ersten primären elektrischen Informationen 116 gegenüber den ersten sekundären elektrischen Informationen 120 plausibilisiert. Diese erste Plausibilisierungseinheit 154 ist strichliert dargestellt, da diese optional an dieser Stelle vorgesehen sein kann, aber bevorzugt im primären Steuergerät 126 oder im sekundären Steuergerät 226 angeordnet und so nur fakultatives Merkmal dieses Ausführungsbeispiels ist. Vorzugsweise ist die erste Plausibilisierungseinheit 154 nicht im ersten Bedienelement 110 vorgesehen, um die genannte vollständige galvanische Trennung zu erreichen.

Ebenso werden die zweiten sekundären elektrischen Informationen 220 über die Schnittstellen 128, 228 an die erste Kommunikationseinheit 122 übertragen, um hieraus Daten 124 für das primäre Steuergerät 126 zu erzeugen. Auch die zweite sekundäre Eingabeerfassungseinheit 218 wird über die Schnittstellen 128, 228 vom ersten Energieversorgungsmodul 130 mit Energie 132 versorgt und ist so galvanisch getrennt von den übrigen Komponenten der zweiten Bedieneinheit 210. Auch hier ist gemäß einer speziellen Ausführungsform durch eine Strichlierung eine zweite Plausibilisierungseinheit 254 dargestellt, um die zweiten primären elektrischen Informationen 216 gegenüber den zweiten sekundären elektrischen Informationen 220 zu plausibilisieren. Vorzugsweise ist dieses Modul jedoch nicht vorgesehen, wenn eine vollständige galvanische Trennung der zweiten sekundären Eingabeerfassungseinheit 218 von den übrigen Komponenten oder Elementen der zweiten Bedieneinheit 210 gewünscht ist. Eine Plausibilisierung kann vorzugsweise über eine Datenverbindung 160 zwischen dem primären Steuergerät 126 und dem sekundären Steuergerät 226 erfolgen. Ferner umfasst das erste Bedienelement 110 eine erste weitere Schnittstelle 142, die entsprechend auch in Form einer zweiten Schnittstelle 242 beim zweiten Bedienelement 210 vorgesehen ist. Die erste weitere Schnittstelle 142 ist mit einer Zustandserfassungseinheit 144, die beispielsweise einem Lenkwinkelsensor 146 zur Erfassung eines Drehwinkels 148 einer Lenkung 150 entspricht, verbunden, um dritte elektrische Informationen 152 zu empfangen. Die Zustandserfassungseinheit 144 könnte auch mit der zweiten Kommunikationseinheit 222 über die zweite weitere Schnittstelle 242 verbunden sein, um so die dritten elektrischen Informationen 152 zu empfangen und entsprechende Daten 224 an das sekundäre Steuergerät 226 zu übertragen.

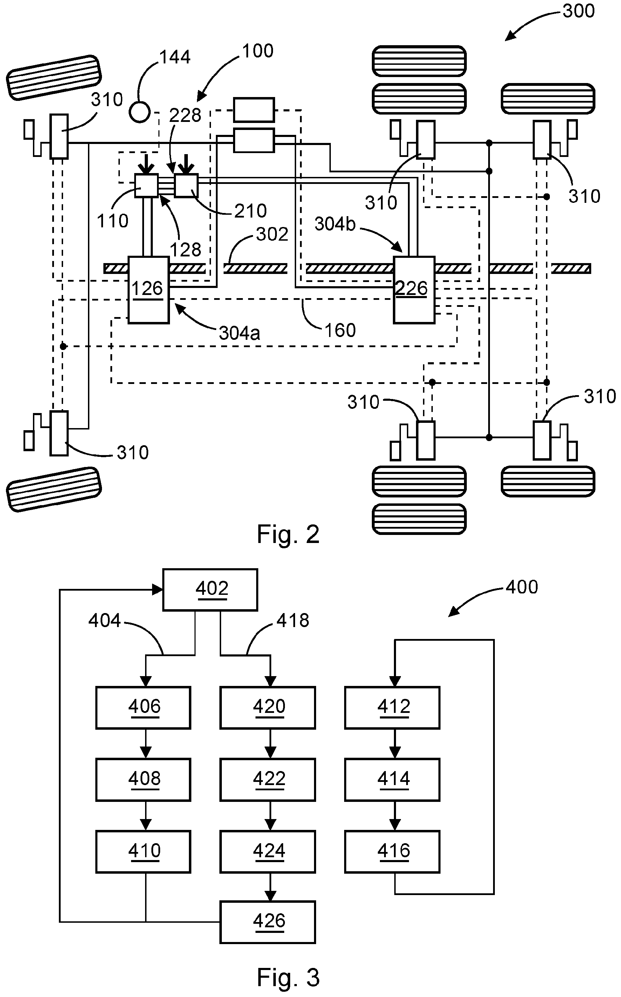

Fig. 2 zeigt ein Fahrzeug 300 mit dem Bediensystem 100, das die erste Bedieneinheit 110 und die zweite Bedieneinheit 210 umfasst. Eine Zustandserfassungseinheit 144 ist mit der ersten Bedieneinheit 110 verbunden. Die erste Bedieneinheit 110 ist über die erste Schnittstelle 128 mit der zweiten Schnittstelle 228 der zweiten Bedieneinheit 210 verbunden. Die erste Bedieneinheit ist ferner mit dem primären Steuergerät 126 und die zweite Bedieneinheit 210 ist mit dem sekundären Steuergerät 226 verbunden. Eine Datenverbindung 160 ist zwischen dem primären Steuergerät 126 und dem sekundären Steuergerät 226 zum Datenaustausch bereitgestellt. Das primäre Steuergerät 126 ist mit allen Aktoren 310, die beispielsweise Bremsaktoren entsprechen, zum Ansteuern dieser Aktoren verbunden. Ebenfalls ist das sekundäre Steuergerät 226 mit allen Aktoren 310 zum Ansteuern dieser Aktoren 310 verbunden, im Fall, dass das primäre Steuergerät 126 beispielsweise ausfällt. Ferner ist ein Fahrzeugrahmen 302, der in Längsrichtung des Fahrzeugs verläuft, rein exemplarisch in Form eines Stegs dargestellt. An einer ersten Position 304a ist das primäre Steuergerät 126 und an einer zweiten Position 304b das sekundäre Steuergerät 226 mit dem Fahrzeugrahmen 302 starr verbunden. Demgegenüber sind die Bedienelemente 110, 210 in einer hier nicht dargestellten Fahrerkabine angeordnet, die gefedert oder gegenüber dem Fahrzeugrahmen 302 klappbar ist. Eine Relativbewegung zwischen den Bedienelementen 110, 210 und den Steuergeräten 126, 226 kann demnach auftreten.

Fig. 3 zeigt die Schritte des Verfahrens 400 gemäß einem Ausführungsbeispiel. In einem Schritt 402 wird zunächst geprüft, ob die erste Bedieneinheit 110 und das primäre Steuergerät 126 fehlerfrei 404 sind. In diesem Fall werden im Schritt 406 erste Eingaben 114 mit der ersten primären Eingabeerfassungseinheit 112 erfasst und im Schritt 408 erste primäre elektrische Informationen 116 in Abhängigkeit von den erfassten ersten Eingaben 114 ausgegeben. Im Schritt 410 werden die ersten primären elektrischen Informationen 116 in Form von Daten 124 an ein primäres Steuergerät 126 übertragen. Außerdem werden im Schritt 412 zweite Eingaben 214 mit einer zweiten primären Eingabeerfassungseinheit 212 erfasst und im Schritt 414 zweite primäre elektrische Informationen 216 in Abhängigkeit von den erfassten zweiten Eingaben 214 mit der zweiten primären Eingabeerfassungseinheit 212 ausgegeben. Im Schritt 416 werden Daten 224 in Abhängigkeit von den zweiten primären elektrischen Informationen 216 durch eine zweite Kommunikationseinheit 222 ausgegeben. Wird im Schritt 402 ein Fehler 418 der ersten primären Eingabeerfassungseinheit 112, der ersten Kommunikationseinheit 122 oder des primären Steuergeräts 126 erfasst, werden statt der Schritte 406, 408, 410 die Schritte 420, 422, 424 ausgeführt. Die Schritte 412, 414, 416 werden wie zuvor auch im genannten Fehlerfall beschrieben ausgeführt. Im Schritt 420 werden die ersten Eingaben 114 mit einer ersten sekundären Eingabeerfassungseinheit 118 erfasst und von der ersten sekundären Eingabeerfassungseinheit 116 im Schritt 422 erste sekundäre elektrische Informationen 120 ausgegeben. Mittels einer ersten Schnittstelle 128 und einer zweiten Schnittstelle 228 werden im Schritt 424 die ersten sekundären elektrischen Informationen 120 von der ersten Bedieneinheit 110 an die zweite Bedieneinheit 210 übertragen. Durch eine zweite Kommunikationseinheit 222 der zweiten Bedieneinheit werden im Schritt 426 Daten 224 in Abhängigkeit von den ersten sekundären elektrischen Informationen 120 an ein sekundäres Steuergerät 226 übertragen.

### Bezugszeichen (Teil der Beschreibung)

- 100: Bediensystem
- 110: erste Bedieneinheit
- 112: erste primäre Eingabeerfassungseinheit
- 114: erste Eingaben
- 116: erste primäre elektrische Informationen
- 118: erste sekundäre Eingabeerfassungseinheit
- 120: erste sekundäre elektrische Informationen
- 122: erste Kommunikationseinheit
- 124: Daten
- 126: primäres Steuergerät
- 127: Energie
- 128: erste Schnittstelle
- 130: erstes Energieversorgungsmodul
- 132: Energie
- 133: Betriebsbremsbedieneinheit
- 134: Pedal
- 136: primärer Sensor
- 138: sekundärer Sensor
- 140: Pedalstellungen
- 142: erste weitere Schnittstelle
- 144: Zustandserfassungseinheit
- 146: Lenkwinkelsensor
- 148: Drehwinkel
- 150: Lenkung
- 152: dritte elektrische Informationen
- 154: erste Plausibilisierungseinheit
- 160: Datenverbindung
- 210: zweite Bedieneinheit
- 212: zweite primäre Eingabeerfassungseinheit
- 214: zweite Eingaben
- 216: zweite primäre elektrische Informationen
- 218: zweite sekundäre Eingabeerfassungseinheit
- 220: zweite sekundäre elektrische Informationen

- 222: zweite Kommunikationseinheit
- 224: Daten
- 226: sekundäres Steuergerät
- 227: Energie
- 228: zweite Schnittstelle
- 230: zweites Energieversorgungsmodul
- 232: Energie
- 233: Parkbremsbedieneinheit
- 236: primäre Positionserfassungseinheit
- 238: sekundäre Positionserfassungseinheit
- 240a: erste Position
- 240b: zweite Position
- 242: zweite weitere Schnittstelle
- 254: zweite Plausibilisierungseinheit
- 300: Fahrzeug
- 302: Fahrzeugrahmen
- 304a: erste Position
- 304b: zweite Position
- 310: Aktoren
- 400: Verfahren
- 402: Prüfen, ob erste Bedieneinheit und primäres Steuergerät fehlerfrei
- 404: fehlerfrei
- 406: Erfassen erste Eingaben
- 408: Ausgeben erste primäre elektrische Informationen
- 410: Übertragen erste primäre elektrische Informationen
- 412: Erfassen zweite Eingaben
- 414: Ausgeben zweite primäre elektrische Informationen
- 416: Ausgeben Daten
- 418: Fehler
- 420: Erfassen erste Eingaben
- 422: Ausgeben erste sekundäre elektrische Informationen
- 424: Übertragen erste sekundäre elektrische Informationen
- 426: Übertragen Daten

## Patentansprüche

1. Bediensystem (100) für ein Fahrzeug (300), wobei das Bediensystem (100) eine erste Bedieneinheit (110) umfasst und die erste Bedieneinheit (110) aufweist:
- eine erste primäre Eingabeerfassungseinheit (112) zum Erfassen von ersten Eingaben (114) in die erste Bedieneinheit (110) und zur Ausgabe von ersten primären elektrischen Informationen (116) in Abhängigkeit von den erfassten ersten Eingaben (114),
- eine erste sekundäre Eingabeerfassungseinheit (118) zum Erfassen der ersten Eingaben (114) in die erste Bedieneinheit (110) und zur Ausgabe von ersten sekundären elektrischen Informationen (120) in Abhängigkeit von den erfassten ersten Eingaben (114),
- eine erste Kommunikationseinheit (122), die mit der ersten primären Eingabeerfassungseinheit (112) verbunden ist, um die ersten primären elektrischen Informationen (116) zu empfangen, wobei die erste Kommunikationseinheit (122) ferner eigerichtet ist, Daten (124) in Abhängigkeit von den ersten primären elektrischen Informationen (116) an ein primäres Steuergerät (126) zu übertragen, und
- eine erste Schnittstelle (128) zum Verbinden mit einer zweiten Bedieneinheit (210), um zweite sekundäre elektrische Informationen (220) von einer zweiten sekundären Eingabeerfassungseinheit (218) der zweiten Bedieneinheit (210) zu empfangen, wobei
die erste Kommunikationseinheit (122) mit der ersten Schnittstelle (128) verbunden ist, um die zweiten sekundären elektrischen Informationen (122) zu empfangen, und wobei die erste Kommunikationseinheit (122) ferner eigerichtet ist, Daten (124) in Abhängigkeit von den zweiten sekundären elektrischen Informationen (220) an das primäre Steuergerät (126) zu übertragen.

2. Bediensystem nach Anspruch 1, wobei die erste Bedieneinheit (110) ein erstes Energieversorgungsmodul (130) zur Energieversorgung (132) der ersten primären Eingabeerfassungseinheit und/oder der ersten Kommunikationseinheit (122) umfasst, wobei die erste Schnittstelle (128) eingerichtet ist, die zweite sekundäre Eingabeerfassungseinheit (218) der zweiten Bedieneinheit (210) mit Energie (132) vom ersten Energieversorgungsmodul (130) zu versorgen.

3. Bediensystem (100) nach Anspruch 1 oder 2, wobei die erste sekundäre Eingabeerfassungseinheit (118) mit der ersten Schnittstelle (128) verbunden ist, um die ersten sekundären elektrischen Informationen (120) in Abhängigkeit von den erfassten ersten Eingaben (114) an der ersten Schnittstelle (128) auszugeben, wobei vorzugsweise die erste sekundäre Eingabeerfassungseinheit (118) galvanisch von der ersten Kommunikationseinheit (122) und/oder dem ersten Energieversorgungsmodul (130) getrennt oder trennbar ist.

4. Bediensystem (100) nach einem der vorhergehenden Ansprüche, wobei das Bediensystem (100) die zweite Bedieneinheit (210) umfasst und die zweite Bedieneinheit (210) aufweist:
- eine zweite primäre Eingabeerfassungseinheit (212) zum Erfassen von zweiten Eingaben (214) in die zweite Bedieneinheit (210) und zur Ausgabe von zweiten primären elektrischen Informationen (216) in Abhängigkeit von den erfassten zweiten Eingaben (214),
- eine zweite Kommunikationseinheit (222), die mit der zweiten primären Eingabeerfassungseinheit (212) verbunden ist, um die zweiten primären elektrischen Informationen (216) zu empfangen, wobei die zweite Kommunikationseinheit (222) ferner eigerichtet ist, Daten (224) in Abhängigkeit von den zweiten primären elektrischen Informationen (216) an ein sekundäres Steuergerät (226) zu übertragen, und
- eine zweite Schnittstelle (228) zum Verbinden mit der ersten Bedieneinheit (110), um die ersten sekundären elektrischen Informationen (120) von der ersten sekundären Eingabeerfassungseinheit (118) der ersten Bedieneinheit (110) zu empfangen, wobei die zweite Kommunikationseinheit (222) mit der zweiten Schnittstelle (228) verbunden ist, um die ersten sekundären elektrischen Informationen (120) zu empfangen, und wobei die zweite Kommunikationseinheit (222) ferner eigerichtet ist, Daten (224) in Abhängigkeit von den ersten sekundären elektrischen Informationen (120) an das sekundäre Steuergerät (220) zu übertragen.

5. Bediensystem (100) nach Anspruch 4, wobei die zweite Bedieneinheit (210) ein zweites Energieversorgungsmodul (230) zur Energieversorgung (232) der zweiten primären Eingabeerfassungseinheit (212) und der zweiten Kommunikationseinheit (222) umfasst, wobei die zweite Schnittstelle (228) eingerichtet ist, die erste sekundäre Eingabeerfassungseinheit (118) der ersten Bedieneinheit (110) mit Energie (232) vom zweiten Energieversorgungsmodul (230) zu versorgen.

6. Bediensystem (100) nach einem der Ansprüche 4 oder 5, wobei die zweite Bedieneinheit (210) die zweite sekundäre Eingabeerfassungseinheit (218) zum Erfassen der zweiten Eingaben (214) in die zweite Bedieneinheit (210) und zur Ausgabe von zweiten sekundären elektrischen Informationen (220) in Abhängigkeit von den erfassten zweiten Eingaben (214) an der zweiten Schnittstelle (228) umfasst, wobei vorzugsweise die zweite sekundäre Eingabeerfassungseinheit (218) galvanisch von der zweiten Kommunikationseinheit (222) und/oder dem zweiten Energieversorgungsmodul (230) getrennt oder trennbar ist.

7. Bediensystem (100) nach einem der vorhergehenden Ansprüche, wobei die erste Bedieneinheit (110) eine Betriebsbremsbedieneinheit (133) ist, die ein Pedal (134) aufweist, wobei die erste primäre Eingabeerfassungseinheit (112) einen primären Sensor (136) und die erste sekundäre Eingabeerfassungseinheit (118) einen sekundären Sensor (138) umfassen, um jeweils eine Pedalstellung (140) des Pedals (134) als erste Eingaben (114) zu erfassen und der primäre Sensor (136) eingerichtet ist, in Abhängigkeit von der Pedalstellung (140) die ersten primären elektrischen Informationen (116) zu erzeugen, und der sekundäre Sensor (138) eingerichtet ist, in Abhängigkeit von der Pedalstellung (140) die ersten sekundären elektrischen Informationen (120) zu erzeugen.

8. Bediensystem (100) nach einem der vorhergehenden Ansprüche, wobei die zweite Bedieneinheit (210) eine Parkbremsbedieneinheit (233) ist, die ein Handbedienelement (234) aufweist, wobei die zweite primäre Eingabeerfassungseinheit (212) eine primäre Positionserfassungseinheit (236) und die zweite sekundäre Eingabeerfassungseinheit (218) eine sekundäre Positionserfassungseinheit (238) umfassen, um jeweils zumindest eine erste Position (240a) des Handbedienelements (234) und eine zweite Position (240b) des Handbedienelements (234) zu erfassen, wobei die primäre Positionserfassungseinheit (236) eingerichtet ist, in Abhängigkeit von der erfassten Position (240a, 240b) die zweiten primären elektrischen Informationen (216) zu erzeugen, und die sekundäre Positionserfassungseinheit (238) eingerichtet ist, in Abhängigkeit von der erfassten Position (240a, 240b) die zweiten sekundären elektrischen Informationen (220) zu erzeugen.

9. Bediensystem (100) nach einem der vorhergehenden Ansprüche, wobei die erste Kommunikationseinheit (122) eingerichtet ist, über die erste Schnittstelle (128) oder eine erste weitere Schnittstelle (142) von einer Zustandserfassungseinheit (144), insbesondere einem Lenkwinkelsensor (146), der beispielsweise einen Drehwinkel (148) einer Lenkung (150) des Fahrzeugs (300) angibt, dritte elektrische Informationen (152) zu empfangen und Daten (124) in Abhängigkeit von den dritten elektrischen Informationen (152) an das primäre Steuergerät (126) zu übertragen und/oder
die zweite Kommunikationseinheit (222) eingerichtet ist, über die zweite Schnittstelle (228) oder eine zweite weitere Schnittstelle (242) von der Zustandserfassungseinheit (144) die dritten elektrischen Informationen (252) zu empfangen und mit der zweiten Kommunikationseinheit (222) Daten (224) in Abhängigkeit von den dritten elektrischen Informationen (152) an das sekundäre Steuergerät (226) zu übertragen.

10. Bediensystem (100) nach einem der vorhergehenden Ansprüche, wobei die erste Bedieneinheit (110) eine erste Plausibilisierungseinheit (154) umfasst, um die ersten primären elektrischen Informationen (116) gegenüber den ersten sekundären elektrischen Informationen (120), zu plausibilisieren und/oder
die zweite Bedieneinheit (210) eine zweite Plausibilisierungseinheit (254) umfasst, um die zweiten primären elektrischen Informationen (216) gegenüber den zweiten sekundären elektrischen Informationen (220), zu plausibilisieren.

11. Bediensystem (100) nach einem der vorhergehenden Ansprüche, wobei das Bediensystem (100) das primäre Steuergerät (126) und/oder das sekundäre Steuergerät (226) umfasst.

12. Bediensystem (100) nach Anspruch 11, wobei das primäre Steuergerät (126) und das sekundäre Steuergerät (226) eine Datenverbindung (160) aufweisen, und eingerichtet sind, die ersten primären elektrischen Informationen (116) gegenüber den ersten sekundären elektrischen Informationen (120) und/oder die zweiten primären elektrischen Informationen (216) gegenüber den zweiten sekundären elektrischen Informationen (220) zu plausibilisieren.

13. Bediensystem (100) nach Anspruch 11 oder 12, wobei das primäre Steuergerät (126) und/oder das sekundäre Steuergerät (226) ein rahmenmontierbares Steuergerät (126, 226) ist, das eingerichtet ist, an einer gegenüber einem Fahrzeugrahmen (302) starren Position (304a, 304b) am Fahrzeug (300) angebracht zu werden.

14. Fahrzeug (300) mit einem Bediensystem (100) nach einem der Ansprüche 1 bis 13.

15. Verfahren (400) zum Betreiben eines Fahrzeugs (300) mit einem Bediensystem(100) nach einem der Ansprüche 1 bis 13, wobei das Verfahren (400)
i) die mit einer ersten Bedieneinheit (210) ausgeführten Schritte im Fall einer fehlerfreien (404) ersten Bedieneinheit (210) und eines fehlerfreien primären Steuergeräts (126) umfasst:
- Erfassen (406) von ersten Eingaben (114) mit einer ersten primären Eingabeerfassungseinheit (112),
- Ausgeben (408) von ersten primären elektrischen Informationen (116) in Abhängigkeit von den erfassten ersten Eingaben (114) mit der ersten primären Eingabeerfassungseinheit (112),
- Übertragen (410) von Daten (124) in Abhängigkeit von den ersten primären elektrischen Informationen (116) an ein primäres Steuergerät (126) mit einer ersten Kommunikationseinheit (122),
ii) und das Verfahren die mit einer zweiten Bedieneinheit ausgeführten Schritte umfasst:
- Erfassen (412) von zweiten Eingaben (214) mit einer zweiten primären Eingabeerfassungseinheit (212),
- Ausgeben (414) von zweiten primären elektrischen Informationen (216) in Abhängigkeit von den erfassten zweiten Eingaben (214) mit der zweiten primären Eingabeerfassungseinheit (212),
- Übertragen (416) von Daten (224) in Abhängigkeit von den zweiten primären elektrischen Informationen (216) an ein sekundäres Steuergerät (226) durch eine zweite Kommunikationseinheit (222),
iii) wobei das Verfahren bei einem Fehler (418) der ersten primären Eingabeerfassungseinheit (112), einem Fehler (418) der ersten Kommunikationseinheit (122) und/oder einem Fehler (418) des primären Steuergeräts (126) die Schritte umfasst:
- Erfassen (420) von ersten Eingaben (114) mit einer ersten sekundären Eingabeerfassungseinheit (116) der ersten Bedieneinheit (110),
- Ausgeben (422) von ersten sekundären elektrischen Informationen (120) in Abhängigkeit von den erfassten ersten Eingaben (114) mit der ersten sekundären Eingabeerfassungseinheit (120),
- Übertragen (424) der ersten sekundären elektrischen Informationen (120) von der ersten Bedieneinheit (110) an die zweite Bedieneinheit (210) mittels einer ersten Schnittstelle (128) der ersten Bedieneinheit (110) und einer zweiten Schnittstelle (228) der zweiten Bedieneinheit (210) und
- Übertragen (426) von Daten (224) in Abhängigkeit von den ersten sekundären elektrischen Informationen (216) an ein sekundäres Steuergerät (226) durch die zweite Kommunikationseinheit (222).

## Claims

1. Operating system (100) for a vehicle (300), wherein the operating system (100) comprises a first operating unit (110) and the first operating unit (110) has:
- a first primary input detection unit (112) for detecting first inputs (114) into the first operating unit (110) and for outputting first primary electrical information (116) depending on the detected first inputs (114),
- a first secondary input detection unit (118) for detecting the first inputs (114) into the first operating unit (110) and for outputting first secondary electrical information (120) depending on the detected first inputs (114),
- a first communication unit (122) which is connected to the first primary input detection unit (112) to receive the first primary electrical information (116), wherein the first communication unit (122) is further designed to transmit data (124) to a primary control device (126) depending on the first primary electrical information (116), and
- a first interface (128) for connecting to a second operating unit (210) to receive second secondary electrical information (220) from a second secondary input detection unit (218) of the second operating unit (210), wherein
the first communication unit (122) is connected to the first interface (128) to receive the second secondary electrical information (122), and wherein the first communication unit (122) is further designed to transmit data (124) to the primary control device (126) depending on the second secondary electrical information (220).

2. Operating system according to claim 1, wherein the first operating unit (110) comprises a first power supply module (130) for supplying power (132) to the first primary input detection unit and/or to the first communication unit (122), wherein the first interface (128) is designed to supply the second secondary input detection unit (218) of the second operating unit (210) with power (132) from the first power supply module (130).

3. Operating system (100) according to claim 1 or 2, wherein the first secondary input detection unit (118) is connected to the first interface (128) to output the first secondary electrical information (120) to the first interface (128) depending on the detected first inputs (114), wherein preferably the first secondary input detection unit (118) is galvanically isolated or can be galvanically isolated from the first communication unit (122) and/or from the first power supply module (130).

4. Operating system (100) according to any of the preceding claims, wherein the operating system (100) comprises the second operating unit (210) and the second operating unit (210) has:
- a second primary input detection unit (212) for detecting second inputs (214) into the second operating unit (210) and for outputting second primary electrical information (216) depending on the detected second inputs (214),
- a second communication unit (222) which is connected to the second primary input detection unit (212) to receive the second primary electrical information (216), wherein the second communication unit (222) is further designed to transmit data (224) to a secondary control device (226) depending on the second primary electrical information (216), and
- a second interface (228) for connecting to the first operating unit (110) to receive the first secondary electrical information (120) from the first secondary input detection unit (118) of the first operating unit (110), wherein the second communication unit (222) is connected to the second interface (228) to receive the first secondary electrical information (120), and wherein the second communication unit (222) is further designed to transmit data (224) to the secondary control device (220) depending on the first secondary electrical information (120).

5. Operating system (100) according to claim 4, wherein the second operating unit (210) comprises a second power supply module (230) for supplying power (232) to the second primary input detection unit (212) and to the second communication unit (222), wherein the second interface (228) is designed to supply the first secondary input detection unit (118) of the first operating unit (110) with power (232) from the second power supply module (230).

6. Operating system (100) according to either of claims 4 or 5, wherein the second operating unit (210) comprises the second secondary input detection unit (218) for detecting the second inputs (214) into the second operating unit (210) and for outputting second secondary electrical information (220) to the second interface (228) depending on the detected second inputs (214), wherein preferably the second secondary input detection unit (218) is galvanically isolated or can be galvanically isolated from the second communication unit (222) and/or from the second power supply module (230).

7. Operating system (100) according to any of the preceding claims, wherein the first operating unit (110) is a service brake operating unit (133) which has a pedal (134), wherein the first primary input detection unit (112) comprises a primary sensor (136) and the first secondary input detection unit (118) comprises a secondary sensor (138) to detect, in each case, a pedal position (140) of the pedal (134) as first inputs (114) and the primary sensor (136) is designed to generate the first primary electrical information (116) depending on the pedal position (140), and the secondary sensor (138) is designed to generate the first secondary electrical information (120) depending on the pedal position (140).

8. Operating system (100) according to any of the preceding claims, wherein the second operating unit (210) is a parking brake operating unit (233) which comprises a manual operating element (234), wherein the second primary input detection unit (212) comprises a primary position detection unit (236) and the second secondary input detection unit (218) comprises a secondary position detection unit (238) to detect, in each case, at least a first position (240a) of the manual operating element (234) and a second position (240b) of the manual operating element (234), wherein the primary position detection unit (236) is designed to generate the second primary electrical information (216) depending on the detected position (240a, 240b), and the secondary position detection unit (238) is designed to generate the second secondary electrical information (220) depending on the detected position (240a, 240b).

9. Operating system (100) according to any of the preceding claims, wherein the first communication unit (122) is designed to receive third electrical information (152) via the first interface (128) or a first further interface (142) from a state detection unit (144), in particular a steering angle sensor (146) which indicates, for example, an angle of rotation (148) of a steering system (150) of the vehicle (300), and to transmit data (124) to the primary control device (126) depending on the third electrical information (152) and/or
the second communication unit (222) is designed to receive the third electrical information (252) from the state detection unit (144) via the second interface (228) or a second further interface (242) and, by the second communication unit (222), to transmit data (224) to the secondary control device (226) depending on the third electrical information (152).

10. Operating system (100) according to any of the preceding claims, wherein the first operating unit (110) comprises a first plausibility testing unit (154) to test the plausibility of the first primary electrical information (116) compared with the first secondary electrical information (120) and/or
the second operating unit (210) comprises a second plausibility testing unit (254) to test the plausibility of the second primary electrical information (216) compared with the second secondary electrical information (220).

11. Operating system (100) according to any of the preceding claims, wherein the operating system (100) comprises the primary control device (126) and/or the secondary control device (226).

12. Operating system (100) according to claim 11, wherein the primary control device (126) and the secondary control device (226) have a data connection (160) and are designed to test the plausibility of the first primary electrical information (116) compared with the first secondary electrical information (120) and/or of the second primary electrical information (216) compared with the second secondary electrical information (220).

13. Operating system (100) according to claim 11 or 12, wherein the primary control device (126) and/or the secondary control device (226) is a frame-mountable control device (126, 226) which is designed to be attached to the vehicle (300) at a position (304a, 304b) which is rigid relative to a vehicle frame (302).

14. Vehicle (300) comprising an operating system (100) according to any of claims 1 to 13.

15. Method (400) for operating a vehicle (300) having an operating system (100) according to any of claims 1 to 13, wherein the method (400)
i) comprises the steps carried out by a first operating unit (210) in the case of an error-free (404) first operating unit (210) and an error-free primary control device (126):
- detecting (406), by a first primary input detection unit (112), first inputs (114),
- outputting (408), by the first primary input detection unit (112), first primary electrical information (116) depending on the detected first inputs (114),
- transmitting (410) data (124) to a primary control device (126) having a first communication unit (122) depending on the first primary electrical information (116),
ii) and the method comprises the steps carried out by a second operating unit:
- detecting (412), by a second primary input detection unit (212), second inputs (214),
- outputting (414), by the second primary input detection unit (212), second primary electrical information (216) depending on the detected second inputs (214),
- transmitting (416), by a second communication unit (222), data (224) to a secondary control unit (226) depending on the second primary electrical information (216),
iii) wherein, in the case of an error (418) of the first primary input detection unit (112), an error (418) of the first communication unit (122) and/or an error (418) of the primary control device (126), the method comprises the steps of:
- detecting (420), by a first secondary input detection unit (116) of the first operating unit (110), first inputs (114),
- outputting (422), by the first secondary input detection unit (120), first secondary electrical information (120) depending on the detected first inputs (114),
- transmitting (424) the first secondary electrical information (120) from the first operating unit (110) to the second operating unit (210) by means of a first interface (128) of the first operating unit (110) and a second interface (228) of the second operating unit (210) and
- transmitting (426), by the second communication unit (222), data (224) to a secondary control device (226) depending on the first secondary electrical information (216).

## Revendications

1. Système de commande (100) pour un véhicule (300), dans lequel le système de commande (100) comprend une première unité de commande (110) et la première unité de commande (110) présente :
- une première unité de détection d'entrée primaire (112) destinée à détecter de premières entrées (114) dans la première unité de commande (110) et à émettre de premières informations électriques primaires (116) en fonction des premières entrées (114) détectées,
- une première unité de détection d'entrée secondaire (118) destinée à détecter les premières entrées (114) dans la première unité de commande (110) et à émettre de premières informations électriques secondaires (120) en fonction des premières entrées (114) détectées,
- une première unité de communication (122) qui est connectée à la première unité de détection d'entrée primaire (112) afin de recevoir les premières informations électriques primaires (116), dans lequel la première unité de communication (122) est en outre configurée pour transmettre des données (124) à un appareil de pilotage primaire (126) en fonction des premières informations électriques primaires (116), et
- une première interface (128) destinée à être connectée à une seconde unité de commande (210) afin de recevoir de secondes informations électriques secondaires (220) provenant d'une seconde unité de détection d'entrée secondaire (218) de la seconde unité de commande (210), dans lequel
la première unité de communication (122) est connectée à la première interface (128) afin de recevoir les secondes informations électriques secondaires (122), et dans lequel la première unité de communication (122) est en outre configurée pour transmettre des données (124) à l'appareil de pilotage primaire (126) en fonction des secondes informations électriques secondaires (220).

2. Système de commande selon la revendication 1, dans lequel la première unité de commande (110) comprend un premier module d'alimentation en énergie (130) destiné à alimenter en énergie (132) la première unité de détection d'entrée primaire et/ou la première unité de communication (122), dans lequel la première interface (128) est configurée pour alimenter la seconde unité de détection d'entrée secondaire (218) de la seconde unité de commande (210) en énergie (132) provenant du premier module d'alimentation en énergie (130).

3. Système de commande (100) selon la revendication 1 ou 2, dans lequel la première unité de détection d'entrée secondaire (118) est connectée à la première interface (128) afin d'émettre les premières informations électriques secondaires (120) vers la première interface (128) en fonction des premières entrées (114) détectées, dans lequel de préférence la première unité de détection d'entrée secondaire (118) est isolée ou peut être isolée galvaniquement de la première unité de communication (122) et/ou du premier module d'alimentation en énergie (130).

4. Système de commande (100) selon l'une des revendications précédentes, dans lequel le système de commande (100) comprend la seconde unité de commande (210) et la seconde unité de commande (210) présente :
- une seconde unité de détection d'entrée primaire (212) destinée à détecter de secondes entrées (214) dans la seconde unité de commande (210) et à émettre de secondes informations électriques primaires (216) en fonction des secondes entrées (214) détectées,
- une seconde unité de communication (222) qui est connectée à la seconde unité de détection d'entrée primaire (212) afin de recevoir les secondes informations électriques primaires (216), dans lequel la seconde unité de communication (222) est en outre configurée pour transmettre des données (224) à un appareil de pilotage secondaire (226) en fonction des secondes informations électriques primaires (216), et
- une seconde interface (228) destinée à être connectée à la première unité de commande (110) afin de recevoir les premières informations électriques secondaires (120) provenant de la première unité de détection d'entrée secondaire (118) de la première unité de commande (110), dans lequel la seconde unité de communication (222) est connectée à la seconde interface (228) afin de recevoir les premières informations électriques secondaires (120), et dans lequel la seconde unité de communication (222) est en outre configurée pour transmettre des données (224) à l'appareil de pilotage secondaire (220) en fonction des premières informations électriques secondaires (120).

5. Système de commande (100) selon la revendication 4, dans lequel la seconde unité de commande (210) comprend un second module d'alimentation en énergie (230) destiné à alimenter en énergie (232) la seconde unité de détection d'entrée primaire (212) et la seconde unité de communication (222), dans lequel la seconde interface (228) est configurée pour alimenter la première unité de détection d'entrée secondaire (118) de la première unité de commande (110) en énergie (232) provenant du second module d'alimentation en énergie (230).

6. Système de commande (100) selon l'une des revendications 4 ou 5, dans lequel la seconde unité de commande (210) comprend la seconde unité de détection d'entrée secondaire (218) destinée à détecter les secondes entrées (214) dans la seconde unité de commande (210) et à émettre des secondes informations électriques secondaires (220) en fonction des secondes entrées (214) détectées vers la seconde interface (228), dans lequel de préférence la seconde unité de détection d'entrée secondaire (218) est isolée ou peut être isolée galvaniquement de la seconde unité de communication (222) et/ou du second module d'alimentation en énergie (230).

7. Système de commande (100) selon l'une des revendications précédentes, dans lequel la première unité de commande (110) est une unité de commande de frein de service (133) qui présente une pédale (134), dans lequel la première unité de détection d'entrée primaire (112) comprend un capteur primaire (136) et la première unité de détection d'entrée secondaire (118) comprend un capteur secondaire (138), afin de détecter respectivement une position de pédale (140) de la pédale (134) en tant que premières entrées (114), et le capteur primaire (136) est configuré pour générer, en fonction de la position de pédale (140), les premières informations électriques primaires (116), et le capteur secondaire (138) est configuré pour générer, en fonction de la position de pédale (140), les premières informations électriques secondaires (120).

8. Système de commande (100) selon l'une des revendications précédentes, dans lequel la seconde unité de commande (210) est une unité de commande de frein de stationnement (233) qui présente un élément de commande manuel (234), dans lequel la seconde unité de détection d'entrée primaire (212) comprend une unité de détection de position primaire (236) et la seconde unité de détection d'entrée secondaire (218) comprend une unité de détection de position secondaire (238), afin de détecter respectivement au moins une première position (240a) de l'élément de commande manuel (234) et une seconde position (240b) de l'élément de commande manuel (234), dans lequel l'unité de détection de position primaire (236) est configurée pour générer, en fonction de la position (240a, 240b) détectée, les secondes informations électriques primaires (216), et l'unité de détection de position secondaire (238) est configurée pour générer, en fonction de la position (240a, 240b) détectée, les secondes informations électriques secondaires (220).

9. Système de commande (100) selon l'une des revendications précédentes, dans lequel la première unité de communication (122) est configurée pour recevoir, par l'intermédiaire de la première interface (128) ou d'une autre première interface (142), de troisièmes informations électriques (152) provenant d'une unité de détection d'état (144), en particulier un capteur d'angle de braquage (146) qui indique, par exemple, un angle de rotation (148) d'une direction (150) du véhicule (300), et pour transmettre des données (124) à l'appareil de pilotage primaire (126) en fonction des troisièmes informations électriques (152), et/ou
la seconde unité de communication (222) est configurée pour recevoir, par l'intermédiaire de la seconde interface (228) ou d'une autre seconde interface (242), les troisièmes informations électriques (252) provenant de l'unité de détection d'état (144), et pour transmettre, à l'aide de la seconde unité de communication (222), des données (224) à l'appareil de pilotage secondaire (226) en fonction des troisièmes informations électriques (152).

10. Système de commande (100) selon l'une des revendications précédentes, dans lequel la première unité de commande (110) comprend une première unité de contrôle de plausibilité (154) destinée à contrôler la plausibilité des premières informations électriques primaires (116) par rapport aux premières informations électriques secondaires (120), et/ou
la seconde unité de commande (210) comprend une seconde unité de contrôle de plausibilité (254) destinée à contrôler la plausibilité des secondes informations électriques primaires (216) par rapport aux secondes informations électriques secondaires (220).

11. Système de commande (100) selon l'une des revendications précédentes, dans lequel le système de commande (100) comprend l'appareil de pilotage primaire (126) et/ou l'appareil de pilotage secondaire (226).

12. Système de commande (100) selon la revendication 11, dans lequel l'appareil de pilotage primaire (126) et l'appareil de pilotage secondaire (226) présentent une connexion de données (160), et sont configurés pour contrôler la plausibilité des premières informations électriques primaires (116) par rapport aux premières informations électriques secondaires (120) et/ou des secondes informations électriques primaires (216) par rapport aux secondes informations électriques secondaires (220).

13. Système de commande (100) selon la revendication 11 ou 12, dans lequel l'appareil de pilotage primaire (126) et/ou l'appareil de pilotage secondaire (226) est un appareil de pilotage (126, 226) montable sur châssis, qui est configuré pour être fixé à une position (304a, 304b) rigide sur le véhicule (300) par rapport à un châssis de véhicule (302).

14. Véhicule (300) comportant un système de commande (100) selon l'une des revendications 1 à 13.

15. Procédé (400) permettant de faire fonctionner un véhicule (300) comportant un système de commande (100) selon l'une des revendications 1 à 13, dans lequel le procédé (400)
i) comprend les étapes mises en œuvre à l'aide d'une première unité de commande (210) dans le cas d'une première unité de commande (210) sans défaut (404) et d'un appareil de pilotage primaire (126) sans défaut :
- détection (406) de premières entrées (114) à l'aide d'une première unité de détection d'entrée primaire (112),
- émission (408) de premières informations électriques primaires (116) en fonction des premières entrées (114) détectées à l'aide de la première unité de détection d'entrée primaire (112),
- transmission (410) de données (124), en fonction des premières informations électriques primaires (116), à un appareil de pilotage primaire (126) comportant une première unité de communication (122),
ii) et le procédé comprend les étapes mises en œuvre à l'aide d'une seconde unité de commande :
- détection (412) de secondes entrées (214) à l'aide d'une seconde unité de détection d'entrée primaire (212),
- émission (414) de secondes informations électriques primaires (216) en fonction des secondes entrées (214) détectées à l'aide de la seconde unité de détection d'entrée primaire (212),
- transmission (416) de données (224), en fonction des secondes informations électriques primaires (216), à un appareil de pilotage secondaire (226) par une seconde unité de communication (222),
iii) dans lequel le procédé comprend les étapes suivantes, en cas d'un défaut (418) de la première unité de détection d'entrée primaire (112), d'un défaut (418) de la première unité de communication (122) et/ou d'un défaut (418) de l'appareil de pilotage primaire (126) :
- détection (420) de premières entrées (114) à l'aide d'une première unité de détection d'entrée secondaire (116) de la première unité de commande (110),
- émission (422) de premières informations électriques secondaires (120) en fonction des premières entrées (114) détectées à l'aide de la première unité de détection d'entrée secondaire (120),
- transmission (424) des premières informations électriques secondaires (120) de la première unité de commande (110) vers la seconde unité de commande (210) par le biais d'une première interface (128) de la première unité de commande (110) et d'une seconde interface (228) de la seconde unité de commande (210), et
- transmission (426) de données (224), en fonction des premières informations électriques secondaires (216), à un appareil de pilotage secondaire (226) par la seconde unité de communication (222).
